# EUROPÄISCHE PATENTSCHRIFT

(11) **EP 2 800 922 B1**
(45) Veröffentlichungstag und Bekanntmachung des Hinweises auf die Patenterteilung: **22.11.2017**
(21) Anmeldenummer: 12799203.0
(22) Anmeldetag: 12.12.2012
(51) Int. Cl.: F16N 11/08

(54) **SCHMIERSTOFFSPENDER**
LUBRICANT DISPENSER
ÉROGATEUR DE GRAISSE

(30) Priorität: 03.01.2012 DE 102012100035
(43) Veröffentlichungstag der Anmeldung: 12.11.2014
(73) Patentinhaber: Perma-Tec GmbH & Co. KG, 97717 Euerdorf (DE)
(72) Erfinder: EISENBACHER, Egon, 97753 Karlstadt (DE); BÜHNER, Kuno, 97772 Oberbach (DE); GROM, Manfred, 97723 Schlimpfhof (DE)
(74) Vertreter: Lorenz, Bernd Ingo Thaddeus
(86) Internationale Anmeldenummer: PCT/EP2012/075291
(87) Internationale Veröffentlichungsnummer: WO 2013/102538

(56) Entgegenhaltungen:
- DE-U1- 29 715 808
- DE-U1- 29 818 084
- US-A- 5 271 528
- US-A1- 2003 183 648

## Beschreibung

Die Erfindung betrifft einen Schmierstoffspender mit einer Schmierstoffkartusche, die einen Schmierstoffvorratsraum mit einer Auslassöffnung für Schmierstoff aufweist, einem mit der Schmierstoffkartusche lösbar verbundenen Träger, welcher einen batteriebetriebenen Motor zum Antrieb einer Spindel aufnimmt, und einen mit der Spindel verbundenen Kolben zum Ausdrücken des Schmierstoffes, wobei eine Abtriebswelle des Motors mittels eines Adapters mit der Spindel verbunden ist und wobei der Adapter in einem zur Schmierstoffkartusche offenen Aufnahmeraum des Trägers drehbeweglich gelagert ist.

Derartige Schmierstoffspender sind aus der Praxis und aus DE 29 715 808 U1 bekannt. Sie werden beispielsweise zur exakten Fettschmierung von Anlagenteilen, wie Wälz- und Gleitlager, Linearführung, Ketten und dergleichen eingesetzt. Die Schmierstoffspender sind beispielsweise mit einer Schmierstelle eines Lagers verbunden und können Schmierstoffe in Abhängigkeit von der Laufzeit einer Maschine oder in vorgegebenen Intervallen nachfördern.

Die WO2010/026559 A1 offenbart einen Schmierstoffspender für ein funkgesteuertes Schmiersystem. Zum grundlegenden Aufbau des Schmierstoffspenders gehört eine Schmierstoffkartusche, welche mit Schmierfett enthält, sowie ein batteriebetriebener Spendemechanismus. Dieser umfasst einen Kolben zur Verdrängung des Schmierfettes aus der Kartusche und einen Aktuatormechanismus zur Bewegung des Kolbens.

Beim Schmierstoffaustrag wird in dem Schmierstoffvorratsraum ein erheblicher Innendruck erzeugt. Aus diesem Innendruck resultiert eine axiale Kraft, die über die Spindel auf den Adapter übertragen wird und von einem Axiallager aufgenommen werden muss. Bei der bekannten Ausführung ist der Adapter an einer Gleitscheibe abgestützt. Durch die Drehbewegung des Adapters unter gleichzeitiger Krafteinwirkung treten Reibungskräfte zwischen dem Adapter und der Gleitscheibe auf. Die Reibungskräfte zwischen dem Adapter und der Gleitscheibe können zusätzlich durch Verunreinigungen zwischen Gleitscheibe und Adapter erhöht werden. Der antreibende Motor wird stark beansprucht, wobei die an der Lagerung des Adapters auftretenden Kräfte und resultierenden Drehmomente einen dominanten Beitrag leisten. Mit der Beanspruchung des Motors steigt der Stromverbrauch. In der Praxis konnte ferner beobachtet werden, dass die zum Antrieb verwendeten Motoren häufig bereits nach der Entleerung weniger Kartuschen defekt waren.

Die US 2003/0183648 A1 offenbart einen Schmierstoffspender mit einer motorisch angetriebenen Welle und einem mit der Welle verbundenen Kolben. Durch reziproke Bewegungen des Kolbens kann Schmierfett angesaugt und mit einem nachfolgenden Kolbenhub wieder ausgestoßen werden. Für die Lagerung der Antriebswelle ist eine Anordnung aus zwei Wälzlagern vorgesehen, welche die bei den reziproken Bewegungen des Kolbens auftretenden Axialkräfte aufnehmen.

Der Erfindung liegt die Aufgabe zugrunde, bei einem Schmierstoffspender mit den eingangs beschriebenen Merkmalen die auf den Motor des Spindelantriebs wirkenden Kräfte und Momente zu reduzieren, um die Standzeit des Motors zu erhöhen und den Stromverbrauch zu senken.

Die Aufgabe wird durch einen Schmierstoffspender nach Anspruch 1 gelöst.

Erfindungsgemäß ist zur Lagerung des Adapters ein Wälzlager vorgesehen, welches zwischen dem Träger und dem Adapter angeordnet ist, und ist der Adapter mittels einer an dem Träger befestigten Rückhalteeinrichtung axial gegen ein Herausfallen aus dem Aufnahmeraum gesichert. Die Rückhalteeinrichtung wirkt nur dann auf den Adapter, solange sich im Innenraum der Schmierstoffkartusche kein Druck aufbaut. Sobald der Schmierstoffspender in Betrieb gesetzt wird und durch eine Ausstoßbewegung des Kolbens an der Kolbenfläche ein Gegendruck entsteht, kommt der Adapter von der Rückhalteeinrichtung frei und bildet sich ein Spalt zwischen der Rückhalteeinrichtung und dem Adapter, sodass eine berührungslose, reibungs- und verschleißfreie Rotation des Adapters an der Rückhalteeinrichtung gewährleistet ist.

Durch die erfindungsgemäße Adapterlagerung ist die zuvor beschriebene Reibungsquelle nahezu eliminiert. Es ist nun ein geringeres Drehmoment notwendig, um die Summe der Reibungskräfte zu überwinden. Der verwendete Motor, der vorzugsweise ein Elektro-Getriebemotor ist, wird daher weniger beansprucht, wodurch Motordefekte verringert werden und die Zuverlässigkeit des Schmierstoffspenders insgesamt erhöht wird. Darüber hinaus besteht die Möglichkeit, leistungsschwächere Motoren in dem Schmierstoffspender zu verwenden, die nicht nur preiswerter sind sondern auch einen geringeren Strombedarf haben und weniger Einbauraum benötigen. Durch die erfindungsgemäße Ausgestaltung kann der Stromverbrauch gesenkt werden. Insgesamt wird durch Reduzierung mechanischer Verluste der energetische Wirkungsgrad verbessert. Die erfindungsgemäße Lehre bewirkt, dass zur Entleerung der Schmierstoffkartusche eine geringere Batteriekapazität benötigt wird. Dadurch entsteht eine geringere Umweltbelastung. Zum Betreiben des Schmierstoffspenders kann im Vergleich zum Stand der Technik eine kleinere Batterie eingesetzt werden. Die erfindungsgemäße Lehre kann ferner genutzt werden, um bei Verwendung einer vorgegebenen, handelsüblichen Batterie eine größere Schmierstoffmenge auszutragen oder bei einer tieferen Betriebstemperatur einen sicheren Schmierstoffaustrag zu gewährleisten. Dadurch verbessern sich die Einsatzmöglichkeiten des Schmierstoffspenders im Freien bei tiefen Temperaturen.

Vorzugsweise besteht die Rückhalteeinrichtung aus einem an dem Träger befestigten Deckel, der eine von der Spindel durchfasste Öffnung aufweist, wobei die Berandung der Öffnung den Umfang des in dem Aufnahmeraum angeordneten Adapters überragt und dadurch axial sichert. Dies ist insbesondere bei einem Wechsel der Schmierstoffkartusche zwecks einer Auffüllung mit neuem Schmierstoff oder für eventuelle Wartungsarbeiten von besonderer Wichtigkeit, da verhindert werden muss, dass der Adapter bei der Zerlegung des Schmierstoffspenders abfällt.

Der in Form eines Deckels ausgebildeten Rückhalteeinrichtung kommen zwei Funktionen zu. Zum einen hat sie die beschriebene Rückhaltefunktion für den Adapter und zum anderen eine Schutzfunktion für das Wälzlager. Ist der Schmierstoffspender außer Betrieb, liegt der Adapter an der Berandung der Öffnung des Deckels an. Ein Abgleiten des Adapters in Richtung der Schmierstoffkartusche ist somit ausgeschlossen. Zudem können keine Verschmutzungen den Übergang zwischen Adapter und der Berandung durchdringen, wodurch der Aufnahmeraum und insbesondere das Wälzlager vor Verunreinigungen geschützt sind. Wie einleitend beschrieben, wird der Adapter während des Austragvorganges minimal in axialer Richtung verschoben, sodass unter Lasteinwirkung des Schmierstoffspenders zwischen dem Adapter und dem Deckel kein Kontakt besteht. Damit ist eine reibungslose Rotation des Adapters beim Betrieb des Schmierstoffspenders gewährleistet.

Vorzugsweise weist der Deckel die Form einer Kappe auf und ist beispielsweise durch eine Rastverbindung oder eine Schraubverbindung lösbar mit dem Träger verbunden. Die lösbare Verbindung ist dabei so gewählt, dass ein Abgleiten des Adapters auch unter Berücksichtigung des Gewichtes der angekuppelten Spindel, des Kolbens und des Wälzlagers nicht möglich ist. Die Kappe liegt an einer der Schmierstoffkartusche zugewandten Vorderseite des Trägers an und ist somit platzsparend im Schmierstoffspender integriert.

Als Wälzlager können unterschiedliche Lager eingesetzt werden. Vorzugsweise ist ein Axial-Rillenkugellager oder ein Axial-Rollenlager vorgesehen. Das Wälzlager weist zweckmäßig einen mit Wälzkörpern bestückten Distanzring und zwei Deckscheiben auf, wobei in die Deckscheiben Laufbahnen für die Wälzkörper eingearbeitet sind. Jeweils eine Deckscheibe wird an dem Träger und an dem Adapter abgestützt, wobei die an dem Träger abgestützte Deckscheibe während des Austragens der Schmierstoffes unbewegt ist und die an dem Adapter abgestützte Deckscheibe die Rotationsbewegung des Adapters schlupffrei aufnimmt. Die Wälzlager zeichnen sich durch einen sehr geringen Verschleiß und eine lange Lebensdauer aus und können große Axialkräfte aufnehmen.

Der Träger weist eine der Schmierstoffkartusche zugewandte Vorderseite sowie eine von der Schmierstoffkartusche abgewandte Rückseite auf. An der Rückseite des Trägers ist ein Aufsatz mit einer Steuerelektronik angeordnet. Die an der Vorderseite des Trägers angeordnete Rückhalteeinrichtung, der Träger und der Aufsatz sind vorzugsweise durch Schrauben, welche Bohrungen des Trägers durchfassen, zu einem Antriebsmodul verbunden. Auf vorteilhafte Weise kann der Schmierstoffspender, beispielsweise zum Nachfüllen der Schmierstoffkartusche mit Schmierstoff, geöffnet werden, ohne dass die in dem Modul integrierten Gegenstände abfallen können. Der Verlust und die Beschädigung sind somit ausgeschlossen.

Der Aufsatz ist fest in einem Gehäusedeckel angeordnet, der mit der Schmierstoffkartusche lösbar verbunden ist.

Zusätzlich ist in dem Träger ein Batteriefach zur Aufnahme mindestens einer Batterie zur Stromversorgung der Steuerelektronik und des Motors angeordnet. Die in dem Batteriefach eingesetzte Stromquelle ist zweckmäßig mittels einer Arretiereinrichtung fixiert.

Der Gehäusedeckel liegt an einem Rand der Schmierstoffkartusche an und ist vorzugsweise mittels eines auf dem Gehäusedeckel angeordneten Überwurfringes gegen die Schmierstoffkartusche verspannbar. Dafür weisen die Schmierstoffkartusche ein Außengewinde und der Überwurfring ein Innengewinde auf, die miteinander verschraubt werden. Der Gehäusedeckel kann Anschläge aufweisen, zwischen denen der Überwurfring axial bewegt werden kann. Ein Verlust des Ringes ist dann ausgeschlossen. Das Aufbringen des Gehäusedeckels auf die Schmierstoffkartusche ist im Vergleich zu aus der Praxis bekannten Schmierstoffspendern, bei denen an dem Gehäusedeckel ein Innengewinde vorgesehen ist, einfacher. Bei dem erfindungsgemäßen Schmierstoffspender kann der Gehäusedeckel passgenau auf die Schmierstoffkartusche aufgebracht und durch das Verschrauben des Ringes mit der Schmierstoffkartusche fixiert werden. Die Gefahr, dass Gewindegänge der Schmierstoffkartusche und des Überwurfringes beim Zusammenfügen verkanten, ist gering, wenn das Innengewinde an einem formstabilen und verhältnismäßig schmalen Ring ausgebildet ist und nicht an der Mantelfläche des Gehäusedeckels angeordnet ist, der aus Kostengründen regelmäßig dünnwandig aus Kunststoff mit einer mäßigen Formstabilität gefertigt ist.

Der Kolben weist einen zylinderförmigen Kragen auf, der vor der Inbetriebnahme des Schmierstoffspenders in einen Ringraum zwischen dem Träger und einer Innenfläche der Schmierstoffkartusche eingreift. Der Kragen und der Träger sind korrespondierend ausgestaltet, wodurch diese passgenau aufeinander geschoben werden können. Ein daraus resultierender Vorteil ist, dass das Anschlußende der Spindel zwangsläufig zentriert in eine dazu korrespondierend ausgestaltete Aufnahme des Adapters einführbar ist. Vorzugsweise weist das Anschlußende der Spindel eine Mehrkantfläche auf.

Die Erfindung wird im Folgenden anhand einer lediglich ein Ausführungsbeispiel darstellenden Zeichnung näher erläutert. Es zeigen schematisch
- Figur 1: einen Längsschnitt des Schmierstoffspenders,
- Figur 2: einen weiteren Schnitt durch den Schmierstoffspender in einer gegenüber Figur 1 rechtwinklig ausgerichteten Schnittebene,
- Figur 3: einen Ausschnitt aus Figur 1 in einer gegenüber Figur 1 vergrößerten Darstellung und
- Figur 4: ein Wälzlager zur Verwendung in dem in den Figuren 1 bis 3 dargestellten Schmierstoffspender.

Zum grundsätzlichen Aufbau des in den Figuren dargestellten Schmierstoffspenders gehören: eine Schmierstoffkartusche 1, die einen Schmierstoffvorratsraum 2 mit einer Auslassöffnung 3 für Schmierstoff 4 aufweist; ein mit der Schmierstoffkartusche 1 lösbar verbundener Träger 5, welcher einen batteriebetriebenen Motor 6 zum Antrieb einer Spindel 7 aufnimmt; ein mit der Spindel 7 verbundener Kolben 8 zum Ausdrücken des Schmierstoffes. Der Motor 6, welcher bei dem hier dargestellten Schmierstoffspender ein Elektro-Getriebemotor ist, weist eine Abtriebswelle 9 auf, die mittels eines Adapters 10 mit der Spindel 7 verbunden ist. Der Adapter 10 ist in einem zur Schmierstoffkartusche 1 offenen Aufnahmeraum 11 des Trägers 5 drehbeweglich gelagert. Als Lagerung des Adapters 10 ist ein Wälzlager 12 vorgesehen, welches zwischen dem Träger 5 und dem Adapter 10 angeordnet ist. Der Adapter 10 ist mittels einer an dem Träger 5 befestigten Rückhalteeinrichtung 13 axial gegen ein Herausfallen aus dem Aufnahmeraum 11 gesichert.

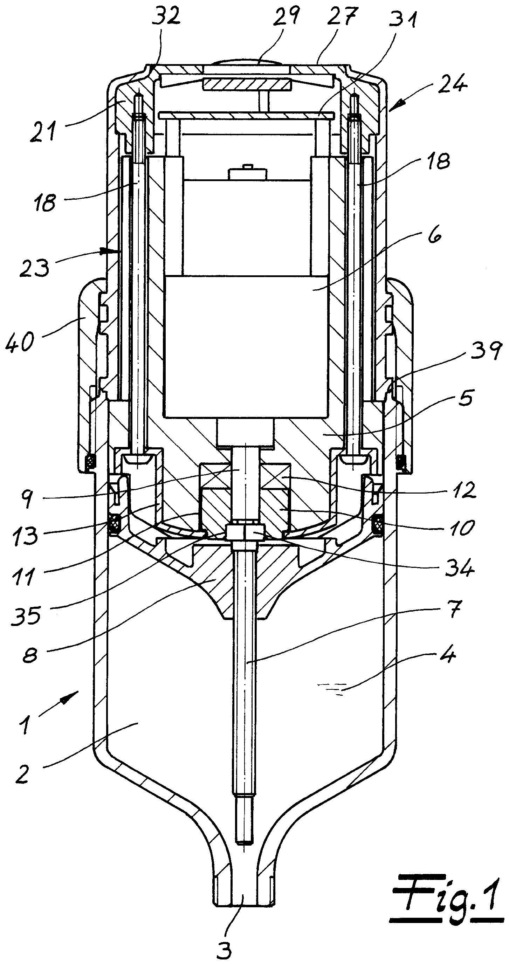

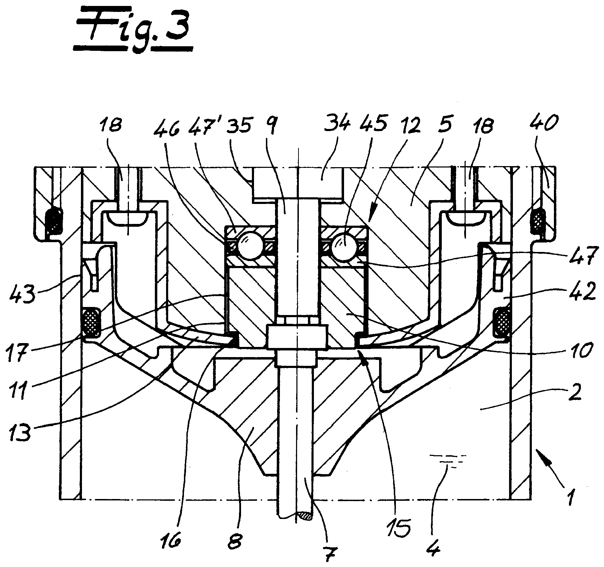

Gemäß der Darstellung in Figur 1 besteht die Rückhalteeinrichtung 13 aus einem an dem Träger 5 befestigten Deckel. Der Deckel liegt an einer der Schmierstoffkartusche 1 zugewandten Vorderseite des Trägers 5 formschlüssig an. Der Deckel weist eine von der Spindel 7 und einem verjüngten Endstück des Adapters 10 durchfasste Öffnung 15 auf (vgl. Fig. 3), wobei die Berandung 16 der Öffnung 15 den Umfang 17 des in dem Aufnahmeraum 11 aufgenommenen Adapters 10 überragt und den Adapter 10 dadurch axial sichert. In einem, wie hier dargestellten, unbelasteten Zustand des Schmierstoffspenders liegt eine Bundfläche des Adapters 10 an der Berandung 16 der Öffnung 15 an. Dies ist insbesondere bei einem Wechsel der Schmierstoffkartusche von Vorteil, da der Adapter 10 bei einer Zerlegung des Schmierstoffspenders dann nicht aus dem Aufnahmeraum 11 herausfallen kann.

Aus Figur 1 ist zu entnehmen, dass der die Rückhalteeinrichtung 13 bildende Deckel die Form einer Kappe aufweist und durch eine Schraubverbindung lösbar mit dem Träger 5 verbunden ist. Wie dargestellt durchfassen Schrauben 18 Bohrungen des Trägers 5 und sind in einem an der Rückseite des Trägers angeordneten Aufsatz 21 eingeschraubt. Die kappenförmige Rückhalteeinrichtung 13, der Träger 5 und der Aufsatz 21 sind durch die Schrauben 18 somit zu einem Antriebsmodul 23 verbunden.

Der Aufsatz 21 ist fest in einem Gehäusedeckel 24 angeordnet, der mit der Schmierstoffkartusche 1 lösbar verbunden ist. Der Aufsatz 21 weist ein Bedienfeld 27 zur Einstellung des Schmierstoffspenders auf und ist mit einer Platine 31 für die Steuerelektronik bestückt. Darüber hinaus ist ein Display 29 vorgesehen.

Das Bedienfeld 27 durchgreift eine Öffnung 32 an einer Stirnseite des Gehäusedeckels 24 und ist somit außerhalb des Schmierstoffspenders einsehbar und bedienbar.

Aus Figur 1 ist zu entnehmen, dass die Spindel 7 an ihrem Spindelende 34 eine Mehrkantfläche aufweist, die in eine korrespondierende Aufnahme 35 des Adapters 10 eingefügt ist.

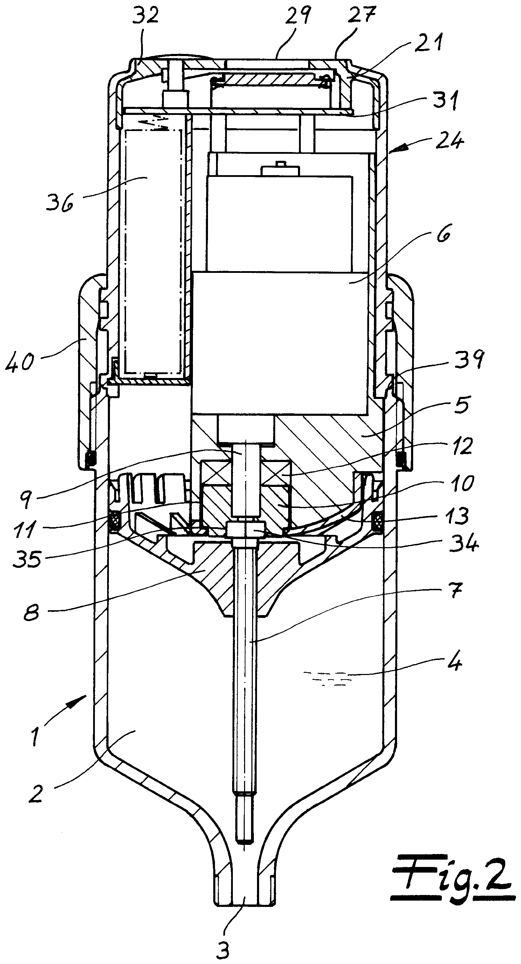

Gemäß der Darstellung in Figur 2 ist in dem Träger 5 ein Batteriefach 36 zur Aufnahme mindestens einer Batterie zur Stromversorgung der Steuerelektronik und des Motors 6 angeordnet. Ferner zeigt die Figur 2, dass der Gehäusedeckel 24 an einem Rand 39 der Schmierstoffkartusche 1 anliegt und mittels eines an dem Gehäusedeckel 24 angeordneten Überwurfringes 40 lösbar gegen die Schmierstoffkartusche 1 verspannt ist. Dafür weisen die Schmierstoffkartusche 1 ein Außengewinde und der Überwurfring 40 ein Innengewinde auf, die miteinander verschraubbar sind. Der Überwurfring 40 ist zweckmäßig als formstabiler Ring ausgebildet und kann an seiner Außenseite ein Profil zur Verbesserung der Griffigkeit und/oder Anschlussflächen für ein Drehwerkzeug aufweisen.

Wie den Figuren zu entnehmen ist, weist der Kolben 8 einen zylinderförmigen Kragen 42 auf, der vor einer Inbetriebnahme des Schmierstoffspenders in einen Ringraum 43 zwischen dem Träger 5 und einer Innenfläche der Schmierstoffkartusche 1 eingreift. Der Kragen 42 und der Träger 5 sind korrespondierend ausgestaltet, wodurch diese konturgenau aufeinander geschoben sind.

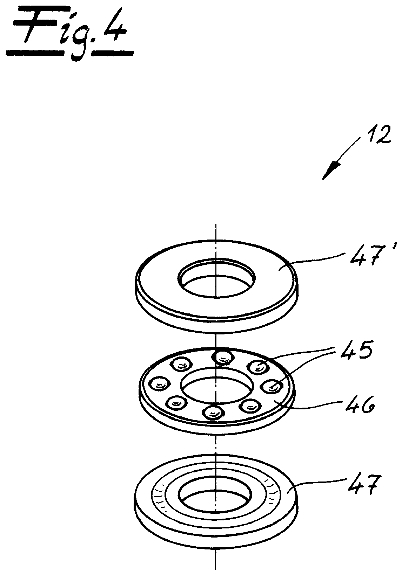

Das Wälzlager 12 des in der Figur dargestellten Schmierstoffspenders ist ein Axial-Rillenkugellager und weist gemäß der Darstellung in Figur 4 einen mit Wälzkörpern 45 bestückten Distanzring 46 und zwei Deckschreiben 47, 47' auf, wobei in die Deckscheiben 47, 47' Laufbahnen für die Wälzkörper 45 eingearbeitet sind. Das Wälzlager 12 weist eine mittige Öffnung auf, die von der Abtriebswelle 9 des Motors 6 durchgriffen ist, wobei die Abtriebswelle 9 in dem Adapter 10 endet und drehfest mit diesem verbunden ist. Jeweils eine Deckscheibe 47, 47' wird an dem Träger 5 und an dem Adapter 10 abgestützt, wobei die an dem Träger 5 abgestützte Deckscheibe 47' während des Austragens des Schmierstoffes 4 unbewegt ist und die an dem Adapter 10 abgestützte Deckscheibe 47 die Bewegung des Adapters 10 schlupffrei aufnimmt, wobei die Wälzkörper 45 dadurch in Bewegung versetzt sind. Befindet sich der Schmierstoffspender unter Last, d. h. wird Schmierstoff 4 aus dem Schmierstoffspender ausgetragen, wird die Spindel 7 angetrieben, wodurch sich der Kolben 8 in Richtung der Auslassöffnung 3 bewegt. Aus dem dabei in dem Schmierstoffspender erzeugten Innendruck resultiert eine axiale Kraft, die über die Spindel 7 auf den Adapter 10 übertragen wird. In Folge dieser Krafteinwirkung wird der Adapter 10 minimal in axialer Richtung verschoben und mit der Kraft gegen das Wälzlager 12 gedrückt.

## Patentansprüche

1. Schmierstoffspender mit
- einer Schmierstoffkartusche (1), die einen Schmierstoffvorratsraum (2) mit einer Auslassöffnung (3) für Schmierstoff (4) aufweist,
- einem mit der Schmierstoffkartusche (1) lösbar verbundenen Träger (5), welcher einen batteriebetriebenen Motor (6) zum Antrieb einer Spindel (7) aufnimmt, und
- einem mit der Spindel (7) verbundenen Kolben (8) zum Ausdrücken des Schmierstoffes (4),
wobei eine Abtriebswelle (9) des Motors (6) mittels eines Adapters (10) mit der Spindel (7) verbunden ist und wobei der Adapter (10) in einem zur Schmierstoffkartusche (1) offenen Aufnahmeraum (11) des Trägers (5) drehbeweglich gelagert ist, **dadurch gekennzeichnet, dass** als Lagerung des Adapters (10) ein Wälzlager (12) vorgesehen ist, welches zwischen dem Träger (5) und dem Adapter (10) angeordnet ist, und dass der Adapter (10) mittels einer an dem Träger (5) befestigten Rückhalteeinrichtung (13) axial gegen ein Herausfallen aus dem Aufnahmeraum (11) gesichert ist, wobei die Rückhalteeinrichtung (13) nur dann auf den Adapter (10) wirkt, solange sich im Innenraum der Schmierstoffkartusche (1) kein Druck aufbaut, und wobei sich ein Spalt zwischen der Rückhalteeinrichtung (13) und dem Adapter (10) bildet, sobald der Schmierstoffspender in Betrieb gesetzt wird und durch eine Ausstoßbewegung des Kolbens (8) an der Kolbenfläche ein Gegendruck entsteht, und die daraus resultierende axiale Kraft über die Spindel (7) auf den Adapter (10) übertragen wird, wobei der Adapter (10) minimal in axialer Richtung verschoben und gegen das Wälzlager (12) gedrückt wird.

2. Schmierstoffspender nach Anspruch 1, **dadurch gekennzeichnet, dass** die Rückhalteeinrichtung (13) aus einem an dem Träger (5) befestigten Deckel besteht, der eine von der Spindel (7) durchfasste Öffnung (15) aufweist, wobei die Berandung (16) der Öffnung (15) den Umfang (17) des in dem Aufnahmeraum (11) angeordneten Adapters (10) überragt und dadurch axial sichert.

3. Schmierstoffspender nach Anspruch 2, **dadurch gekennzeichnet, dass** der Deckel die Form einer Kappe aufweist und durch eine Rastverbindung oder eine Schraubverbindung (18) lösbar mit dem Träger (5) verbunden ist.

4. Schmierstoffspender nach einem der Ansprüche 1 bis 3, **dadurch gekennzeichnet, dass** das Wälzlager (12) aus einem Axial-Rillenkugellager oder einem Axial-Rollenlager besteht.

5. Schmierstoffspender nach Anspruch 4, **dadurch gekennzeichnet, dass** das Wälzlager (12) einen mit Wälzkörpern (45) bestückten Distanzring (46) und zwei Deckscheiben (47, 47') aufweist, wobei in die Deckscheiben (47, 47') Laufbahnen für die Wälzkörper (45) eingearbeitet sind.

6. Schmierstoffspender nach einem der Ansprüche 1 bis 5, **dadurch gekennzeichnet, dass** der Träger (5) eine der Schmierstoffkartusche (1) zugewandte Vorderseite sowie eine von der Schmierstoffkartusche (1) abgewandte Rückseite aufweist, dass an der Rückseite des Trägers (5) ein Aufsatz (21) mit einer Steuerelektronik angeordnet ist und dass die an der Vorderseite des Trägers (5) angeordnete Rückhalteeinrichtung (13), der Träger (5) und der Aufsatz (21) durch Schrauben (18), welche Bohrungen des Trägers (5) durchfassen, zu einem Antriebsmodul (23) verbunden sind.

7. Schmierstoffspender nach Anspruch 6, **dadurch gekennzeichnet, dass** der Träger (5) ein Batteriefach (36) zur Aufnahme mindestens einer Batterie aufweist.

8. Schmierstoffspender nach Anspruch 6 oder 7, **dadurch gekennzeichnet, dass** der Aufsatz (21) fest in einem Gehäusedeckel (24) angeordnet ist, der mit der Schmierstoffkartusche (1) lösbar verbunden ist.

9. Schmierstoffspender nach Anspruch 8, **dadurch gekennzeichnet, dass** der Gehäusedeckel (24) an einem Rand (39) der Schmierstoffkartusche (1) anliegt und mittels eines auf dem Gehäusedeckel (24) angeordneten Überwurfrings (40) gegen die Schmierstoffkartusche (1) verspannbar ist.

10. Schmierstoffspender nach einem der Ansprüche 1 bis 9, **dadurch gekennzeichnet, dass** der Kolben (8) einen zylinderförmigen Kragen (42) aufweist, der vor der Inbetriebnahme des Schmierstoffspenders in einen Ringraum (43) zwischen dem Träger (5) und einer Innenfläche der Schmierstoffkartusche (1) eingreift.

## Claims

1. A lubricant dispenser with
- a lubricant cartridge (1) comprising a lubricant reservoir (2) with an outlet opening (3) for lubricant (4),
- a carrier (5) releasably connected to the lubricant cartridge (1), the carrier receiving a battery-operated motor (6) for driving a spindle (7), and
- a piston (8) connected to the spindle (7) for expressing a lubricant (4),
wherein a drive shaft (9) of the motor (6) is connected to the spindle (7) by means of an adapter (10) and wherein the adapter (10) is rotatingly mounted in a receiving space (11) of the carrier (5), which is open towards the lubricant cartridge (1), **characterised in that** a roller bearing (12) is provided as a mounting for the adapter (10), which is arranged between the carrier (5) and the adapter (10), and **in that** the adapter (10) is axially secured against dropping out of the receiving space (11) by means of a retaining means (13) fixed to the carrier (5), wherein the retaining means (13) impacts the adapter (10) only as long as there is no build-up of pressure inside the lubricant cartridge (1), and wherein a gap forms between the retaining means (13) and the adapter (10) as soon as the lubricant dispenser is put into operation and an ejection move by the piston (8) causes a counter-pressure to develop on the piston surface, and the axial force resulting therefrom is transferred via the spindle (7) onto the adapter (10), wherein the adapter (10) is minimally displaced in axial direction and pressed against the roller bearing (12).

2. The lubricant dispenser according to claim 1, **characterised in that** the retaining means (13) consists of a lid fixed to the carrier (5), which comprises an opening (15) reached through by the spindle (7), wherein the boundary (16) of the opening (15) overreaches the circumference (17) of the adapter (10) arranged in the receiving pace (11), thereby axially securing it.

3. The lubricant dispenser according to claim 2, **characterised in that** the lid is shaped like a cap and is releasably connected to the carrier (5) by a snap-on connection or a screw connection (18).

4. The lubricant dispenser according to one of claims 1 to 3, **characterised in that** the roller bearing (12) consists of an axial deep groove ball bearing or an axial roller bearing.

5. The lubricant dispenser according to claim 4, **characterised in that** the roller bearing (12) comprises a distance ring (46) provided with rolling elements (45) and two cover disks (47, 47'), wherein running tracks for the rolling elements (45) are machined into the cover disks (47, 47').

6. The lubricant dispenser according to one of claims 1 to 5, **characterised in that** the carrier (5) comprises a front side facing the lubricant cartridge (1) and a rear side facing away from the lubricant cartridge (1), **in that** a top part (21) with control electronics is arranged on the rear side of the carrier (5), and **in that** the retaining means (13) arranged on the front side of the carrier (5), the carrier (5) and the top part (21) are connected by screws (18) reaching through bores in the carrier (5) so as to form a drive module (23).

7. The lubricant dispenser according to claim 6, **characterised in that** the carrier (5) comprises a battery compartment (36) for receiving at least one battery.

8. The lubricant dispenser according to claim 6 or 7, **characterised in that** the top part (21) is fixedly arranged in a housing lid (24), which is releasably connected to the lubricant cartridge (1).

9. The lubricant dispenser according to claim 8, **characterised in that** the housing lid (24) is supported against a rim (39) of the lubricant cartridge (1) and can be tensioned against the lubricant cartridge (1) by means of a retaining ring (40) arranged on the housing lid (24).

10. The lubricant dispenser according to one of claims 1 to 9, **characterised in that** the piston (8) comprises a cylindrically shaped collar (42), which prior the lubricant dispenser being put into operation engages in an annular chamber (43) between the carrier (5) and an inner surface of the lubricant cartridge (1).

## Revendications

1. Distributeur de lubrifiant comprenant
- une cartouche de lubrifiant (1) qui comporte un espace de réserve de lubrifiant (2) avec un orifice de sortie (3) pour du lubrifiant (4),
- un support (5) assemblé de manière amovible avec la cartouche de lubrifiant (1), lequel réceptionne un moteur (6) actionné par batterie, destiné à entraîner une broche (7) et
- un piston (8) assemblé avec la broche (7) pour expulser le lubrifiant (4),
un arbre de sortie (9)du moteur (6) étant assemblé au moyen d'un adaptateur (10) avec la broche (7) et l'adaptateur (10) étant logé en étant mobile en rotation dans un espace réceptacle (11) ouvert sur la cartouche de lubrifiant (1) du support (5), **caractérisé en ce qu'**en tant que logement de l'adaptateur (10), il est prévu un roulement (12), lequel est placé entre le support (5) et l'adaptateur (10) et **en ce que** l'adaptateur (10) est bloqué au moyen d'un système de retenue (13) fixé sur le support (5) contre une chute en direction axiale hors de l'espace réceptacle (11), le système de retenue (13) n'agissant sur l'adaptateur (10) qu'aussi longtemps qu'il ne s'établit aucune pression dans l'espace intérieur de la cartouche de lubrifiant (1) et un interstice se formant entre le système de retenue (13) et l'adaptateur (10) dès qu'on met en service le distributeur de lubrifiant et par un déplacement d'expulsion du piston (8), une pression antagoniste se produisant sur la surface du piston et la force axiale qui en résulte étant transmise par l'intermédiaire de la broche (7) sur l'adaptateur (10), l'adaptateur (10) étant déplacé au minimum en direction axiale et poussé contre le roulement (12).

2. Distributeur de lubrifiant selon la revendication 1, **caractérisé en ce que** le système de retenue (13) est constitué d'un couvercle fixé sur le support (5), qui comporte un orifice (15) traversé par la broche (7), la bordure (16) de l'orifice (15) saillant par-dessus la périphérie (17) de l'adaptateur (10) placé dans l'espace réceptacle (11) et le bloquant ainsi en direction axiale.

3. Distributeur de lubrifiant selon la revendication 2, **caractérisé en ce que** le couvercle présente la forme d'une calotte et est assemblé de manière amovible avec le support (5) par un assemblage par enclenchement ou par un assemblage par vis (18).

4. Distributeur de lubrifiant selon l'une quelconque des revendications 1 à 3, **caractérisé en ce que** le roulement (12) est constitué d'un roulement à billes rainuré axial ou d'un roulement à rouleaux axial.

5. Distributeur de lubrifiant selon la revendication 4, **caractérisé en ce que** le roulement (12) comporte une bague d'écartement (46) équipée de corps de roulement (45) et deux disques de recouvrement (47, 47'), dans les disques de recouvrement (47, 47') étant ménagées des pistes de roulement pour les corps de roulement (45).

6. Distributeur de lubrifiant selon l'une quelconque des revendications 1 à 5, **caractérisé en ce que** le support (5) comporte une face avant dirigée vers la cartouche de lubrifiant (1), ainsi qu'une face arrière opposée à la cartouche de lubrifiant (1), **en ce que** sur la face arrière du support (5) est placé un embout (21) avec une électronique de commande et **en ce que** le système de retenue (13) placé sur la face avant du support (5), le support (5) et l'embout (21) sont assemblés par des vis (18), lesquels traversent des alésages du support (5) en un module d'entraînement (23).

7. Distributeur de lubrifiant selon la revendication 6, **caractérisé en ce que** le support (5) comporte un compartiment à batterie (36) destiné à recevoir au moins une batterie.

8. Distributeur de lubrifiant selon la revendication 6 ou 7, **caractérisé en ce que** l'embout (21) est placé de manière fixe dans un couvercle de boîtier (24) qui est assemblé de manière amovible avec la cartouche de lubrifiant (1).

9. Distributeur de lubrifiant selon la revendication 8, **caractérisé en ce que** le couvercle de boîtier (24) est adjacent à un bord (39) de la cartouche de lubrifiant (1) et au moyen d'un connecteur (40) placé sur le couvercle de boîtier (24), peut être contraint contre la cartouche de lubrifiant (1).

10. Distributeur de lubrifiant selon l'une quelconque des revendications 1 à 9, **caractérisé en ce que** le piston (8) comporte un collet (42) cylindrique, qui avant la mise en service du distributeur de lubrifiant s'engage dans un espace annulaire (43) entre le support (5) et une surface intérieure de la cartouche de lubrifiant (1).
